# EUROPEAN PATENT APPLICATION

(11) **EP 4 576 383 A1**
(43) Date of publication of application: **25.06.2025**
(21) Application number: 23935520.9
(22) Date of filing: 24.11.2023
(51) Int. Cl.: H01M 50/383, H01M 50/211

(54) **BATTERY PACK AND VEHICLE COMPRISING BATTERY PACK**

(30) Priority: 28.04.2023 KR 20230056233; 03.07.2023 KR 20230086025
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR); YOON, Young-Il, Daejeon 34122 (KR)
(74) Representative: Plasseraud IP
(86) International application number: PCT/KR2023/019156
(87) International publication number: WO 2024/225547

(57) **Abstract**

A battery pack according to an embodiment of the present disclosure may include: a plurality of battery cells; a pack case configured to accommodate the plurality of battery cells and having a venting portion configured to discharge gas generated from the battery cells to the outside; and a protective cover configured to cover at least a portion of the venting portion.

## Description

### TECHNICAL FIELD

The present disclosure relates to a battery pack and a vehicle including the same.

The present application claims priority to Korean Patent Application No. 10-2023-0056233 filed on April 28, 2023 in the Republic of Korea, the disclosures of which are incorporated herein by reference.

The present application claims priority to Korean Patent Application No. 10-2023-0086025 filed on July 03, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of a primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, if an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack. Alternatively, recently, a cell-to-pack-type battery pack that stores a plurality of battery cells directly in a pack housing or the like, without modularizing the plurality of battery cells, has also been manufactured.

If a thermal event such as thermal runaway occurs inside the battery pack, gas may be ejected from the battery cell contained therein, and such gas may include flame or the like. In addition, generally, when gas is ejected from the battery cell, high-temperature particles of electrode plates or active materials may be discharged from the battery cell to the outside, and these high-temperature particles may be in the form of sparks.

In the case of a conventional battery pack, if an abnormality occurs in a specific battery cell or battery module, high-temperature gas is often discharged through a venting portion that is provided in a pack case to discharge the high-temperature gas or the like to the outside of the pack case. At this time, if sparks are exposed, along with the gas, to the outside of the pack case, they may react with oxygen outside the battery pack, causing a flame or developing into a fire outside the battery pack. Furthermore, if a flame or fire occurs outside a specific battery pack, the fire may spread to other adjacent battery packs or a device equipped with the battery pack, causing a bigger problem.

Accordingly, there is a need for technology to prevent sparks or flames from being exposed to the outside of the battery pack through the venting portion, thereby suppressing the occurrence or spread of flames or fire outside the battery pack.

### DISCLOSURE

### Technical Problem

The present disclosure has been designed to solve the problems of the related art, and therefore the present disclosure is directed to providing a battery pack capable of ensuring safety and reliability in the event of abnormalities in the battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery cells; a pack case configured to accommodate the plurality of battery cells and having a venting portion configured to discharge gas generated from the battery cells to the outside; and a protective cover configured to cover at least a portion of the venting portion.

The protective cover may be provided between the plurality of battery cells and the venting portion.

The protective cover may be configured to cover the upper portion of the venting portion so as to block sparks emitted from the battery cells.

The battery pack according to one aspect of the present disclosure may further include a module case configured to accommodate the plurality of battery cells in an inner space and having a venting hole formed at the top thereof so as to communicate with the inner space.

The pack case may include a base frame on which the plurality of battery cells are seated, and a side frame extending upwards from the base frame and having the venting portion formed thereon, and the protective cover may be configured to face the side frame where the venting portion is formed.

The pack case may further include a pack lid coupled to the top of the side frame and configured to cover the top of the plurality of battery cells, and the protective cover may be coupled to the pack lid.

The protective cover may include a main cover provided to face the venting portion, and a lid-coupled portion extending from the main cover to be bent toward the pack lid and coupled to the pack lid.

The protective cover may further include a side cover configured to be bent from both sides of the main cover toward the side frame.

The side cover may be configured such that the end thereof comes into contact with the side frame.

The protective cover may further include a support portion configured by bending the end of the side cover to be supported on the side frame.

The protective cover may further include a lower bent portion configured to be bent from the lower end of the main cover toward the base frame.

The protective cover may further include a protrusion configured such that at least a portion of the main cover protrudes in a direction away from the side frame.

The protective cover may further include an inner bent portion configured to be bent from both sides of the main cover in a direction away from the side frame.

In addition, a vehicle according to the present disclosure may include the battery pack according to the present disclosure.

### Advantageous Effects

According to one aspect of the present disclosure, it is possible to prevent sparks generated in abnormal situations of the battery cell from being exposed to the outside of the pack case, thereby ensuring safety and reliability.

Moreover, according to one aspect of the present disclosure, it is possible to effectively secure the performance of preventing thermal propagation between packs by suppressing flame development outside the battery pack.

As a result, it is possible to prevent or delay events, such as fire or explosion, due to thermal runaway of a battery pack including a plurality of battery modules or a device to which it is mounted.

In particular, in the case of electric vehicles, it is possible to secure sufficient time for occupants to escape or drive by suppressing or delaying the propagation of thermal runaway between the battery cells or battery modules.

Additionally, according to one aspect of the present disclosure, venting gas generated in the event of abnormalities in the battery cell may be effectively discharged to the outside of the pack case.

In addition, according to one aspect of the present disclosure, it is possible to quickly discharge high-temperature gas or the like generated from the battery cell in the event of abnormalities in a specific battery cell or battery module inside one battery pack to the outside of the pack case. Therefore, thermal damage to other battery cells or battery modules may be minimized to prevent further chain ignition.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is an overall perspective view of a battery pack according to an embodiment of the present disclosure.
FIG. 2 is an exploded perspective view of a battery pack according to an embodiment of the present disclosure.
FIG. 3 is an enlarged view of a portion of a battery pack according to an embodiment of the present disclosure.
FIG. 4 is a diagram illustrating the direction in which sparks are discharged inside the battery pack according to an embodiment of the present disclosure. For example, FIG. 4 may be a diagram illustrating the cross-section taken along line I-I' in FIG. 1.
FIG. 5 is a front view of a protective cover included in a battery pack according to an embodiment of the present disclosure.
FIG. 6 is a perspective view illustrating the bottom of a pack lid provided with a protective cover in a battery pack according to an embodiment of the present disclosure.
FIG. 7 is an enlarged cross-sectional view of the primary portion of a battery pack according to an embodiment of the present disclosure.
FIG. 8 is a diagram illustrating a protective cover included in a battery pack according to an embodiment of the present disclosure.
FIG. 9 is a cross-sectional view of a battery pack when viewed from above according to an embodiment of the present disclosure. For example, FIG. 9 may be a diagram illustrating the cross-section taken along line II-II' in FIG. 1.
FIG. 10 is a cross-sectional view of a battery pack when viewed from above according to another embodiment of the present disclosure. For example, FIG. 10 may be a diagram illustrating the cross-section taken along line II-II' in FIG. 1.
FIG. 11 is a cross-sectional view of a battery pack according to another embodiment of the present disclosure.
FIG. 12 is a cross-sectional view of a battery pack according to another embodiment of the present disclosure.
FIG. 13 is a cross-sectional view of a battery pack when viewed from above according to another embodiment of the present disclosure. For example, FIG. 13 may be a diagram illustrating the cross-section taken along line II-II' in FIG. 1.
FIG. 14 is a perspective view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of the substantially same or similar elements will be omitted from the respective embodiments, and a description will be made based on differences therebetween.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

For example, in an embodiment of the present disclosure, the ±X-axis directions shown in the drawing may indicate left and right directions, the ±Y-axis directions may indicate forward and backward directions perpendicular to the ±X-axis directions on the horizontal plane (the X-Y plane), and the ±Z-axis directions may indicate upward and downward directions (vertical direction) perpendicular to both the ±X-axis directions and the ±Y-axis directions.

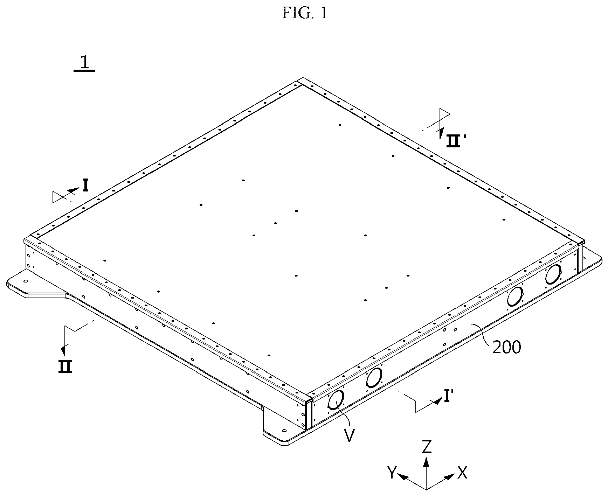

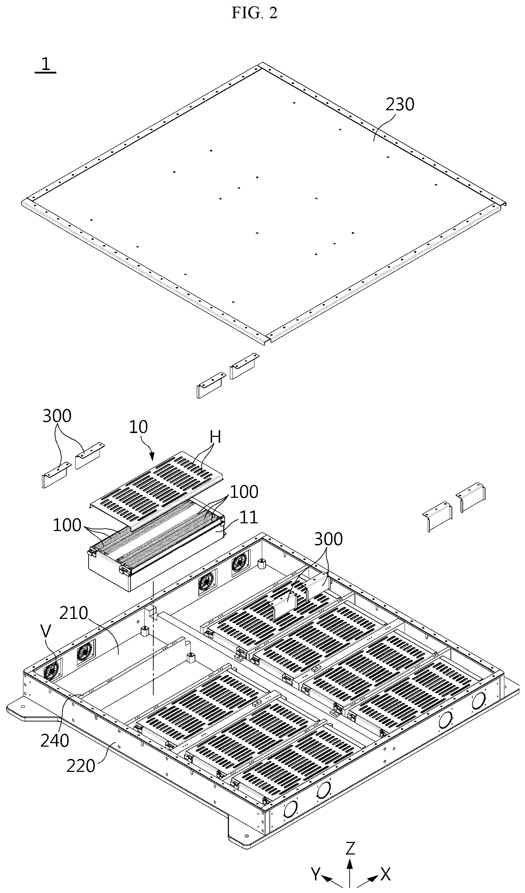

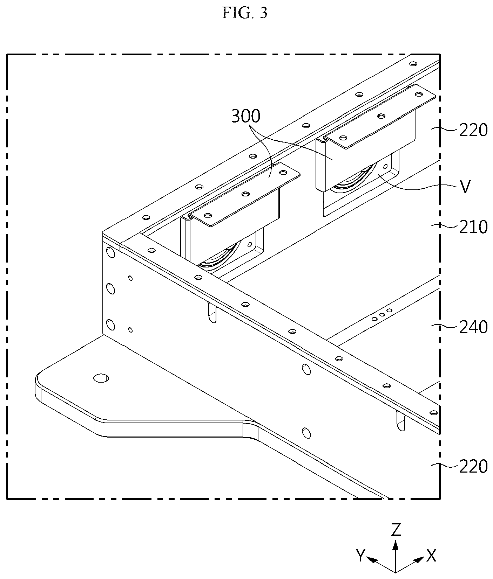

FIG. 1 is an overall perspective view of a battery pack according to an embodiment of the present disclosure, FIG. 2 is an exploded perspective view of a battery pack according to an embodiment of the present disclosure, and FIG. 3 is an enlarged view of a portion of a battery pack according to an embodiment of the present disclosure.

Referring to FIGS. 1 to 3, a battery pack 1 according to an embodiment of the present disclosure includes a battery cell 100, a pack case 200, and a protective cover 300.

First, referring to FIG. 2, a plurality of battery cells 100 may be provided. In addition, the plurality of battery cells 100, although not shown in the drawing, may include an electrode assembly, a cell case accommodating the electrode assembly, and an electrode lead that is connected to the electrode assembly and extends to the outside of the cell case, serving as an electrode terminal. In this case, the plurality of battery cells 100 may be electrically connected to each other.

The battery cell 100 may be a pouch-type secondary battery. The cell case of this pouch-type secondary battery may be configured in the form of a pouch in which a metal layer made of aluminum is interposed between polymer layers.

As shown in FIG. 2 the plurality of batterv cells 100 may be arranged side by side in the forward and backward directions (±Y-axis direction) while standing vertically (in the ±Z-axis direction). In this case, sealing portions of each battery cell 100 may be directed in the left and right directions (±X-axis direction) and the upward and downward directions (±Z-axis direction), and a receiving portion thereof may be directed in the forward and backward directions (±Y-axis direction).

Meanwhile, the present disclosure is not limited to a specific type or form of the battery cell 100, and various battery cells 100 known at the time of filing of the present disclosure may be used to constitute the battery pack 1 of the present disclosure. Although this embodiment describes a pouch-type secondary battery that has high energy density and is easy to stack as shown in the drawing, a cylindrical or prismatic secondary battery may also be applied to the battery cell 100.

The pack case 200 may be configured to accommodate a plurality of battery cells 100. That is, the pack case 200 may provide an accommodation space to accommodate a plurality of battery cells 100. The pack case 200 may be made of a material capable of securing mechanical rigidity, such as metal, such as steel or SUS, or plastic, or may include such a material in order to safely protect the battery cell 100 accommodated therein.

Additionally, the pack case 200 may have a venting portion V. The venting portion V may be configured to discharge gas generated from the battery cell 100 stored therein to the outside of the pack case 200. The venting portion V may be configured in the form of a hole formed to communicate the inside and the outside of the pack case 200 with each other.

Alternatively, the venting portion V may be configured as a venting device that is mounted in the hole of the pack case 200 and operates when venting gas is generated inside the pack case 200.

For example, the venting portion V may be provided with a venting valve or may be implemented as such a venting valve. In this case, a mounting hole may be formed in a side frame 220 such that the venting portion V is to be mounted in the mounting hole. In the case where the venting portion V has a venting valve or is implemented in the form of a venting valve, if the internal pressure of the pack case 200 increases, the venting valve may open to discharge venting gas to the outside of the pack case 200.

Meanwhile, the battery pack 1 according to an embodiment of the present disclosure may further include a protective cover 300. The protective cover 300 may be configured to cover at least a portion of the venting portion V. According to an embodiment of the present disclosure, the protective cover 300 may be configured to completely block sparks from passing through the protective cover 300.

The protective cover 300 may be made of a material that has low thermal conductivity and excellent heat resistance and/or fire resistance. For example, the protective cover 300 may be made of a flame-retardant mica material. Alternatively, the protective cover 300 may be made of a metal material with rigidity and heat resistance.

Sparks or flames having a strong tendency of travelling in straight lines may be discharged from the battery cell 100 and may collide with the internal structure of the pack case 200 to move to the venting portion V. According to the above-implemented configuration of the present disclosure, the protective cover 300 may prevent sparks from being discharged to the outside of the pack case 200. Accordingly, it is possible to suppress the occurrence of a flame due to a reaction between sparks and oxygen outside the pack case 200. Therefore, according to the above aspect of the present disclosure, the safety and reliability of the battery pack 1 may be guaranteed.

In addition, according to an implemented configuration of the present disclosure, the protective cover 300 may be configured to cover a portion of the venting portion V, as shown in FIG. 3 or the like. That is, the protective cover 300 may be located on the inner side of the venting portion V so as to cover only a portion of the inner side of the venting portion V, instead of the entire portion thereof. In this case, sparks generated in the battery cell 100 may be blocked by the protective cover 300, and at the same time, venting gas may be smoothly discharged through the exposed portion of the venting portion V. As a result, when an abnormality occurs in the battery cell 100, the venting gas may be quickly discharged to the outside of the pack case 200 through the venting portion V, thereby preventing the internal pressure of the pack case 200 from increasing and additional chain ignition of other battery cells 100.

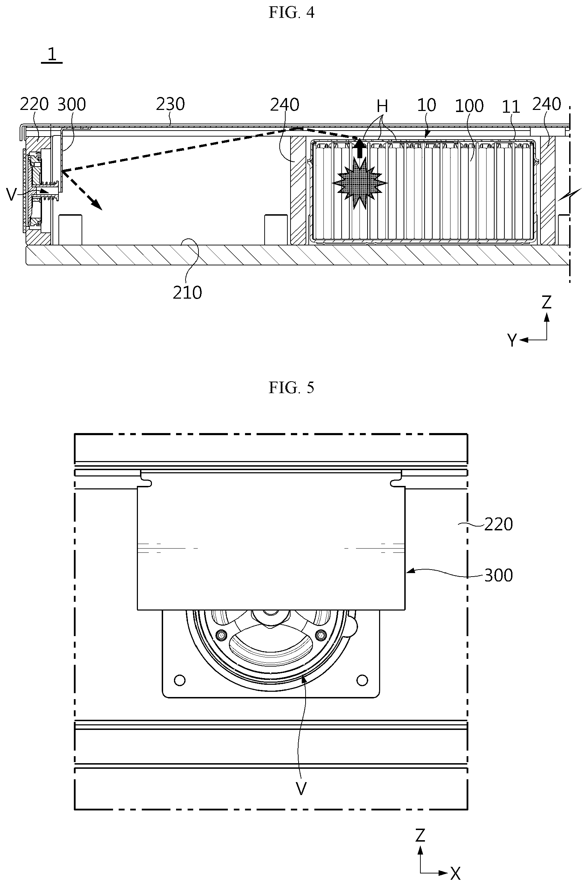

FIG. 4 is a diagram illustrating the direction in which sparks are discharged inside the battery pack according to an embodiment of the present disclosure. For example, FIG. 4 may be a diagram illustrating the cross-section taken along line I-I' in FIG. 1. FIG. 5 is a front view of a protective cover included in a battery pack according to an embodiment of the present disclosure.

Referring further to FIGS. 4 and 5, the protective cover 300 may be provided between a plurality of battery cells 100 and the venting portion V. That is, the protective cover 300 may be provided on the inner side of the pack case 200, in particular, inner side of the venting portion V. Specifically, venting gases and/or sparks generated in the battery cell 100 may move to the venting portion V. That is, a venting path through which venting gases and/or sparks flow may be formed between the plurality of battery cells 100 and the venting portion. In this case, the protective cover 300 may be provided to cross the venting path. In other words, the protective cover 300 may be provided on the venting path to suppress movement of sparks or the like

According to the above-implemented configuration of the present disclosure, sparks ejected from the battery cell 100 may be blocked in advance before reaching the venting portion V of the pack case 200 so as to prevent the sparks from being discharged to the outside of the pack case 200, thereby more effectively suppressing flames from occurring outside the pack case 200.

In particular, according to an embodiment of the present disclosure, as shown in FIG. 5, the protective cover 300 may be configured to cover the upper portion of the venting portion V.

Specifically, venting gases or sparks discharged from the battery cell 100 are at a high temperature and may have a strong tendency to travel toward the upper portion. Therefore, as in the above embodiment, if the protective cover 300 is configured to cover the upper portion of the venting portion V, sparks having a strong tendency of travelling straight may definitely collide with the protective cover 300, thereby surely preventing the sparks from being discharged to the outside. At the same time, the venting gas may be smoothly discharged to the outside of the pack case 200 by the internal pressure through the lower portion of the venting portion V, which is exposed without being covered by the protective cover 300.

In addition, the high-temperature venting gas may move toward the venting portion V along the inner upper surface of the pack case 200 to then be discharged to the outside. At this time, since the upper portion of the venting portion V is covered by the protective cover 300 according to the above-implemented configuration, the protective cover 300 may change the flow direction of the venting gas before being discharged through the venting portion V. In addition, during this process, sparks or the like moving toward the venting portion V along with the venting gas may be suppressed from being discharged to the outside by the protective cover 300.

In addition, according to the above-implemented configuration of the present disclosure, if high-temperature gas or the like is discharged to the outside of the pack case 200 in a situation such as thermal runaway, the discharged gas may not head to the upper side. In particular, in the case where the occupants are located above the battery pack 10, such as in an electric vehicle, upward discharge of gas or flame may be suppressed, thereby further improving the safety of the occupants. That is, according to the implemented configuration of the present disclosure, directional venting of the battery pack 10 in the downward direction may be performed, thereby improving the safety of users, such as occupants, located on the upper side.

Meanwhile, referring to FIG. 2, a plurality of battery cells 100 may be modularized into one or more battery modules 10. That is, the battery pack 1 according to the present disclosure may include one or more battery modules 10. In addition, a plurality of battery cells 100 may be included as elements in one or more battery modules 10. In this case, several battery cells 100 included in the battery module 10 may be electrically connected to each other.

Moreover, a plurality of battery modules 10 may be provided inside the pack case 200. In other words, the battery pack 1 according to the present disclosure may include a plurality of battery modules 10, and the plurality of battery cells 100 included in the battery pack 1 may be divided and included in the plurality of battery modules 10.

In particular, the battery pack 1 according to the present disclosure may include a module case 11.

The module case 11 may be configured to have an inner space formed therein to accommodate at least some of the plurality of battery cells 100. In particular, the module case 11 may be included in each battery module 10, and may group the plurality of battery cells 100 into several battery modules 10 and act as a boundary for physically defining the inner space of each battery module 10.

In addition, although not shown in the drawing, the battery module 10 may include a bus-bar assembly and/or a module terminal electrically connected to the plurality of battery cells 100 accommodated therein.

The battery module 10 may include a venting hole H. The venting hole H may be configured to discharge gas generated in the battery cell 100 stored inside the module case 11 to the outside of the module case 11.

Specifically, the venting hole H may be provided in the module case 11 to enable directional venting in a specific direction. For example, as shown in FIGS. 2 and 4, the venting hole H may be provided at the top of the module case 11. According to this implemented configuration, venting gas and/or sparks may be guided to be discharged to the upper side of the battery module.

According to the above-implemented configuration of the present disclosure, venting gas or sparks may be guided to the upper portion of the pack case 200 as indicated by the dotted arrow in FIG. 4. Therefore, when the venting gas or sparks move toward the venting portion V along the upper inner surface of the pack case 200, the flow may be more completely blocked by the protective cover 300 that covers the upper portion of the venting portion V. Accordingly, it is possible to more effectively suppress the sparks from being discharged to the outside of the pack case 200.

Meanwhile, referring to FIG. 2, the pack case 200 according to an embodiment of the present disclosure may include a base frame 210 and a side frame 220.

The base frame 210 may constitute the lower surface of the pack case 200 and may be provided in the form of a square plate. In addition, the base frame 210 may be configured such that a plurality of battery cells 100 is seated on the upper surface thereof. Furthermore, the base frame 210 may have a flat upper surface so that a plurality of battery cells 100 or module cases 11 may be stably seated thereon.

The side frame 220 may extend upwards from respective edges of the base frame 210. The side frame 220 may be configured to have a plurality of unit walls to surround the plurality of battery cells 100 or battery modules 10. More specifically, the side frame 220 may include a rear wall located at the end of the base frame 210 in the +Y-axis direction, a right wall located at the end thereof in the +X-axis direction, a front wall located at the end thereof in the -Y-axis direction, and a left wall located at the end thereof in the -X-axis direction, thereby constituting the side of the pack case 200.

The venting portion V may be provided on the side of the pack case 200, that is, on the side frame 220. In this case, the protective cover 300 may be located on the side frame 220 so as to cover at least a portion of the venting portion V.

A plurality of venting portions V and a plurality of protective covers 300 may be provided. In particular, the venting portions V may be located on at least some of the several unit walls of the side frame 220. In addition, the venting portions V may be formed separately on two or more unit walls, or two or more venting portions V may be formed on one unit wall. For example, referring to FIG. 2, a plurality of venting portions V may be provided on the front wall and the rear wall, respectively.

In this case, the protective cover 300 may be installed on each venting portion V to correspond thereto. For example, as shown in the implemented configuration in FIG. 2, four venting portions V may be formed on the front wall and the rear wall, respectively, and the protective cover 300 may be separately provided for each venting portion V, so that a total of eight protective covers 300 may be included in the battery pack. The plurality of venting portions V and the protective covers 300 may be provided to be symmetrical to each other with respect to the center of the side frame 220.

Meanwhile, the installation number and positions of the venting portions V and protective covers 300 described based on the embodiment in FIG. 2 are only examples, and different numbers and positions of venting portions V and protective covers 300 may also be configured. For example, although the venting portions V and the protective covers 300 are provided on the walls of the side frame 220 in the ±X-axis direction, that is, on the front wall and rear wall in FIG. 2, they may also be provided on the walls in the ±Y-axis direction, that is, on the left wall and right wall. Moreover, according to the above-implemented configuration of the present disclosure, since high-temperature gas or the like may be discharged in both directions of the pack case 200 in the event of an abnormality of the battery cell 100, gas may be more quickly and easily discharged to the outside of the pack case 200.

The protective cover 300 may be configured to face the side frame 220 on which the venting portion V is formed. In this case, at least a portion of the protective cover 300 may be provided to be spaced a predetermined distance apart from the side frame 220. According to the above-implemented configuration of the present disclosure, the venting gas may move through the gap between the protective cover 300 and the side frame 220 and may be discharged effectively to the outside through the exposed portion of the venting portion V, which is not covered by the protective cover 300.

The protective cover 300 may be provided in a plate shape. As the protective cover 300 is manufactured in a plate shape, the protective cover 300 may be configured to face the venting portion V or the side frame 220 in parallel. According to the above-implemented configuration of the present disclosure, the protective cover 300 may more easily cover a portion of the venting portion V. In addition, according to the above-implemented configuration of the present disclosure, it is easy to assemble the battery pack 1, thereby reducing time and cost. In addition, since the volume and weight of the protective cover 300 are reduced, the energy density of the battery pack 1 may be improved.

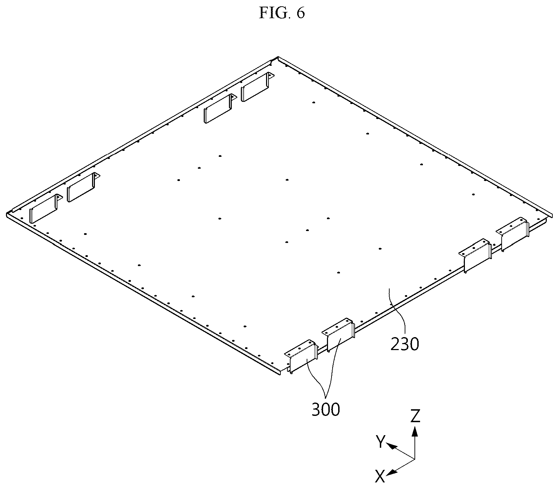

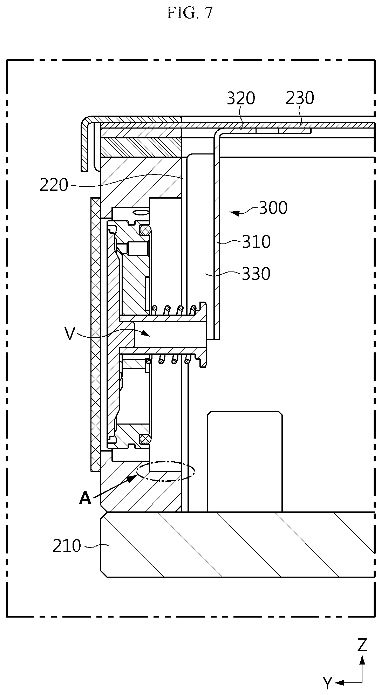

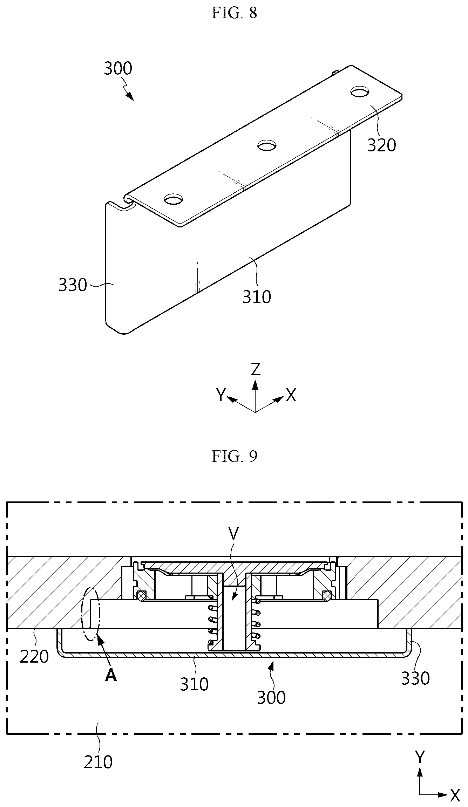

FIG. 6 is a perspective view illustrating the bottom of a pack lid provided with a protective cover in a battery pack according to an embodiment of the present disclosure. FIG. 7 is an enlarged cross-sectional view of the primary portion of a battery pack according to an embodiment of the present disclosure. FIG. 8 is a diagram illustrating a protective cover included in a battery pack according to an embodiment of the present disclosure.

Referring to FIGS. 1, 6, and 7, the battery pack 1 according to an embodiment of the present disclosure may further include a pack lid 230. The pack lid 230 may be configured to cover the top of a plurality of battery cells 100. To this end, the pack lid 230 may be coupled to the top of the side frame 220 to constitute the upper surface of the pack case 200. The pack lid 230 may protect the elements stored therein, such as the battery cell 100, and prevent venting gas and/or sparks emitted from the battery cell 100 from being discharged to the outside of the pack case 200, in particular, to the upper portion thereof. In particular, the pack lid 230 may guide venting gas and sparks toward the venting portion V in the inner space of the pack case 200.

Meanwhile, referring to FIGS. 2 and 4, the pack case 200 may further include a cross-beam 240. The cross-beam 240 may be provided to separate a plurality of battery cells 100 or battery modules 10 from each other. The cross-beam 240 may be provided between the plurality of battery cells 100 and the side frame 220 provided with the venting portion V. For example, the cross-beam 240 may be configured in the form of a partition extending long in the left and right directions, and may be interposed between the battery modules 10 arranged adjacent to each other in the forward and backward directions. In addition, the cross-beam 240 may be configured in the form of a partition extending long in the forward and backward directions, and may be interposed between the battery modules 10 arranged adjacent to each other in left and right directions.

In addition, the cross-beam 240 may be provided to be spaced a predetermined distance apart from the pack lid 230. That is, the cross-beam 240 may be configured such that at least a portion of its upper end is spaced a predetermined distance apart from the lower surface of the pack lid 230, instead of being in contact therewith.

According to this implemented configuration, it is possible to prevent heat or flame from directly transferring between the cell assemblies or battery modules 10 separated in different accommodation spaces by the cross-beam 240. In addition, according to the above-implemented configuration, gases or sparks generated in the battery cell 100 may be further guided to the upper portion in the inner space of the pack case through the space between the cross-beam 240 and the pack lid 230. For example, as shown in the area indicated by the dotted arrow in FIG. 4, gases or sparks may move through the space between the cross-beam 240 and the pack lid 230 and may be reflected by the pack lid 230 or may flow toward the venting portion V along the lower surface of the pack lid 230 to reach the protective cover 300 that covers the upper portion of the venting portion V. According to the above-implemented configuration of the present disclosure, the protective cover 300 may more completely block sparks emitted from the battery cell 100.

As in the implemented configuration shown in FIGS. 6 and 7, the protective cover 300 may be coupled to the pack lid 230. In particular, the protective cover 300 may be provided to be coupled to the lower surface of the pack lid 230. In this case, the protective cover 300 may be fixed to the pack lid 230 by bolting. Alternatively, the protective cover 300 may be manufactured integrally with the pack lid 230.

According to the above-implemented configuration of the present disclosure, since the protective cover 300 is manufactured by being pre-coupled to the pack lid 230, if the pack lid 230 is coupled to the side frame 220, the protective cover 300 may be automatically installed on the side of the venting portion V of the side frame 220. Accordingly, a process of separately coupling the protective cover 300 to the side frame 220 may be omitted. Therefore, time and cost may be reduced in manufacturing the battery pack 1, thereby improving productivity.

The detailed structure of the protective cover 300 will be described with reference to FIG. 9, in addition to FIGS. 7 and 8. FIG. 9 is a cross-sectional view of a battery pack when viewed from above according to an embodiment of the present disclosure. For example, FIG. 9 may be a diagram illustrating the cross-section taken along line II-II' in FIG. 1.

The protective cover 300 may include a main cover 310 and a lid-coupled portion 320.

The main cover 310 may be provided to face the venting portion V. The main cover 310 may be configured to cover at least a portion of the venting portion V. The main cover 310 may be configured in the form of a plate standing vertically and provided to face the side frame 220 in parallel to each other.

The lid-coupled portion 320 may be provided to extend from the main cover 310. Specifically, the lid-coupled portion 320 may be configured to be bent and extend from the upper end of the main cover 310 in the horizontal direction so as to come into surface-contact with the pack lid 230. That is, the lid-coupled portion 320 may be configured to form a right angle to the main cover 310. In this case, the lid-coupled portion 320 may be configured in the form of a plate to be coupled to the pack lid 230. For example, the lid-coupled portion 320 may be bolted and fixed to the pack lid 230.

According to the above-implemented configuration of the present disclosure, a coupling and fixing configuration between the protective cover 300 and the pack lid 230 may be attained by a simple structure. In addition, in this case, assembly of the battery pack may become easier, and the inner space of the pack case occupied by the protective cover 300 may be minimized, and the effect of blocking sparks or the like to the venting portion V may be obtained more reliably.

Referring to FIGS. 7 to 9, the protective cover 300 according to an embodiment of the present disclosure may further include a side cover 330. The side cover 330 may be configured to extend from at least one side of the main cover 310. According to an embodiment of the present disclosure, the side covers 330 may extend to be bent from both sides of the main cover 310 toward the side frame 220. For example, the side covers 330 may be configured to be bent in the left direction (the -X-axis direction) from both ends of the main cover 310 in the forward and backward directions (the ±Y-axis direction). The side cover 330 may be configured to block the side surface of the venting portion V.

According to the above-implemented configuration of the present disclosure, the protective cover 300 may block sparks headed for the side surface of the venting portion V, as well as sparks headed for the front surface thereof, thereby more effectively blocking the sparks from being discharged to the outside of the pack case 200. In addition, according to the above-implemented configuration of the present disclosure, it is possible to prevent sparks not blocked by the protective cover 300 from flowing back into the pack case 200. For example, it is possible to prevent sparks introduced in the downward direction of the main cover 310 from re-entering through the side surface.

In addition, referring to FIG. 9, the side cover 330 may be provided such that the end thereof is in contact with the side frame 220. That is, the gap between the main cover 310 and the inner surface of the side frame 220 may be equal to the length by which the side cover 330 extends from the main cover 310.

According to the above-implemented configuration of the present disclosure, it is possible to completely block sparks from being discharged through the gap between the main cover 310 and the side frame 220. In addition, according to the above-implemented configuration of the present disclosure, since the protective cover 300 is firmly supported on the side frame 220 by the side cover 330, it is possible to secure rigidity when an impact is applied to the pack case 200. In addition, the space between the main cover 310 and the inner surface of the side frame 220 may be maintained. In addition, in this case, the angle between the main cover 310 and the side frame 220 may remain constant without varying. Therefore, the venting gas may be smoothly discharged to the outside of the pack case 200 through the venting portion V, and the effect of blocking sparks or the like by the protective cover 300 may be stably secured.

Meanwhile, referring to FIGS. 7 and 9, a step A may be formed between the venting portion V and the inner surface of the side frame 220. That is, at least a portion of the venting portion V may be provided at a position where the inner surface of the side frame 220 is recessed inward.

According to the above-implemented configuration of the present disclosure, the separation distance between the main cover 310 and the side frame 220 and/or the venting portion V may be secured in the upper portion of the venting portion V, thereby providing a space through which venting gas may flow. Moreover, in this case, the venting gas may also be discharged through the portion of the venting portion V covered by the protective cover 300. Therefore, even if the venting gas is trapped in the space between the protective cover 300 and the venting portion V, it may be more easily discharged to the venting portion V through the separation space.

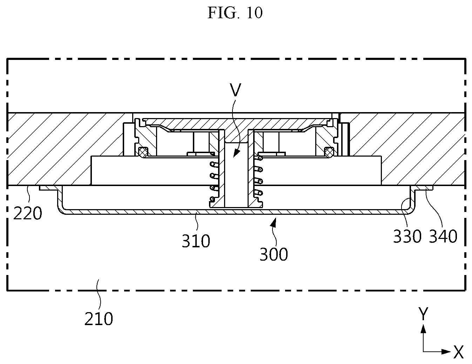

FIG. 10 is a cross-sectional view of a battery pack when viewed from above according to another embodiment of the present disclosure. For example, FIG. 10 may be a diagram illustrating the cross-section taken along line II-II' in FIG. 1.

Referring to FIG. 10, a protective cover 300 according to another embodiment of the present disclosure may further include a support portion 340. The support portion 340 may be configured by bending the end of the side cover 330. The support portion 340 may be provided to be supported on the side frame 220. That is, a plurality of support portions 340 may be provided by being bent from the side covers 330 provided on both sides of the main cover 310.

For example, in the embodiment shown in FIG. 10, the support portion 340 may be provided at the front end of the front side frame 220 and the rear end of the rear side frame 220, respectively.

In particular, the support portion 340 may come into surface-contact with the inner surface of the side frame 220. To this end, the support portion 340 may have an outer surface parallel to the inner surface of the side frame 220. For example, the support portion 340 may be configured in the form of a plate standing vertically and parallel to the X-Z plane and may come into contact with the inner surface of the left or right side frame 220.

According to the above-implemented configuration of the present disclosure, the protective cover 300 may be more reliably supported on the side frame 220. Therefore, its shape and position may be maintained stably without deformation such as bending due to external vibration or impact, internal sparks, or gas pressure.

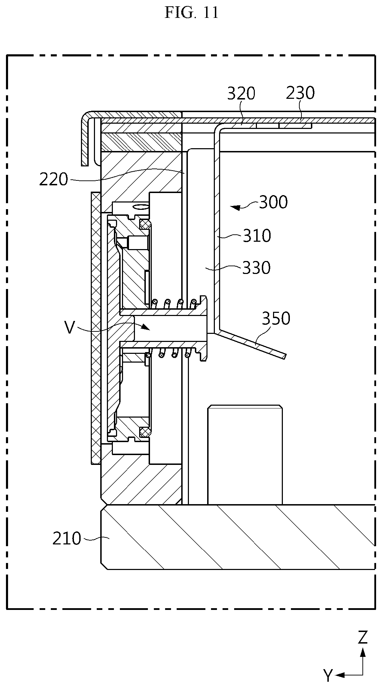

FIG. 11 is a cross-sectional view of a battery pack according to another embodiment of the present disclosure.

Referring to FIG. 11, the protective cover 300 may further include a lower bent portion 350.

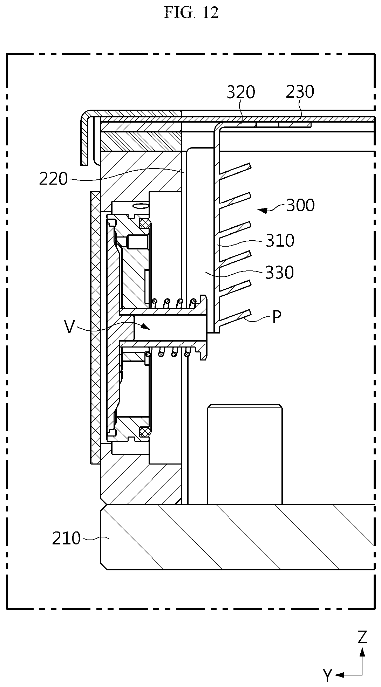

The lower bent portion 350 may be configured to extend inward from the lower end of the main cover 310 while being bent at a predetermined angle. Furthermore, the lower bent portion 350 may be configured to be bent such that as it further extends inward (in the -Y-axis direction in FIG. 12), it approaches the base frame 210. Here, the lower bent portion 350 may be configured in a diagonal shape. That is, the lower bent portion 350 may be provided to form an obtuse angle with the main cover 310.

According to the above-implemented configuration of the present disclosure, sparks that collide with the main cover 310 and are reflected downwards may be guided to the inside of the pack case 200. Accordingly, it is possible to more completely block sparks from heading back to the venting portion V, thereby more effectively suppressing sparks from being discharged to the outside of the pack case 200.

FIG. 12 is a cross-sectional view of a battery pack according to another embodiment of the present disclosure.

As shown in FIG. 12, the protective cover 300 may further include a protrusion P.

The protrusion P may be configured such that at least a portion of the main cover 310 protrudes. The protrusion P may be configured to protrude from the inner surface of the main cover 310 in a direction away from the side frame 220, that is, to the inside of the pack case 200. For example, referring to the implemented configuration in FIG. 12, the protrusion P may be configured to protrude inward (in the -Y-axis direction) from the inner surface of the main cover.

Furthermore, the protrusion P may be configured to be directed to the pack lid 230 in a diagonal shape on the inner surface of the main cover 310. That is, the protrusion P may be provided to form an acute angle with the main cover 310. For example, at least a portion of the protrusion P may be configured to protrude inward from the inner surface of the main cover 310 and to be directed in the upward direction as it further extends inward. The length by which the protrusion P protrudes from the main cover 310 may vary.

In addition, a plurality of protrusions P may be provided. The plurality of protrusions P may be arranged to be spaced apart from each other in the vertical direction (the ±Z-axis direction). Alternatively, the plurality of protrusions P may be arranged to be spaced apart from each other in the horizontal direction (the ±X-axis direction).

According to the above-implemented configuration of the present disclosure, sparks or flames emitted from the battery cell 100 may be reflected by the protrusions P, thereby further suppressing the flow of sparks or flames, which have a strong tendency of travelling straight. Furthermore, in this case, particles such as sparks may be collected by grooves formed between the protrusions P. Accordingly, sparks and flames may be more effectively prevented from being discharged to the outside of the pack case 200.

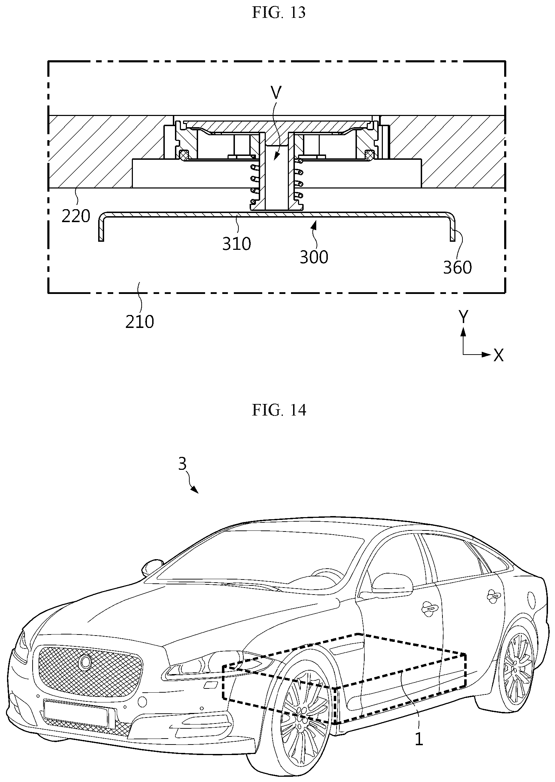

FIG. 13 is a cross-sectional view of a battery pack when viewed from above according to another embodiment of the present disclosure. For example, FIG. 13 may be a diagram illustrating the cross-section taken along line II-II' in FIG. 1.

Referring to FIG. 13, the protective cover 300 may further include an inner bent portion 360.

The inner bent portion 360 may be provided to extend from at least one side of the main cover 310. According to an embodiment of the present disclosure, the inner bent portion 360 may extend to be bent in a direction away from the side frame 220 from both sides of the main cover 310, that is, toward the inside of the pack case 200. The inner bent portion 360 may be configured to block sparks from moving toward the side of the venting portion V. Furthermore, the inner bent portion 360 may be provided to guide sparks or the like, that move to the venting portion V in the outward direction of the pack case 200, in the inward direction of the pack case 200. For example, in the embodiment shown in FIG. 13, the inner bent portion 360 may cause the flow of sparks moving in the +Y-axis direction toward the venting portion V to turn or change in the opposite direction, i.e., in the -Y-axis direction.

According to the above-implemented configuration of the present disclosure, the protective cover 300 may switch the direction of flow of sparks toward the venting portion V in the pack case 200 to the inward direction thereof, thereby more effectively preventing sparks or flames from being discharged to the outside of the pack case 200. Moreover, according to the above-implemented configuration of the present disclosure, the side portion of the protective cover 300 is spaced apart from the side frame 220, so that venting gas may be discharged through this space. Therefore, it is possible to effectively discharge venting gas through the venting portion V while blocking sparks or flames.

FIG. 14 is a perspective view schematically illustrating a vehicle including a battery pack according to an embodiment of the present disclosure.

Referring to FIG. 14, a vehicle 3 according to an embodiment of the present disclosure may include one or more battery packs 1 according to the above-described embodiments. The vehicle 3 according to the present disclosure may be, for example, an electric vehicle, a hybrid vehicle, or a plug-in hybrid vehicle. The vehicle 3 includes a four-wheeled vehicle and a two-wheeled vehicle. The vehicle 3 may drive by receiving power from the battery pack 1 or battery module 10 according to an embodiment of the present disclosure.

Although the preferred embodiments of the present disclosure have been illustrated and described above, the present disclosure is not limited to the specific embodiments described above, and it should be noted that there may be various modifications by those skilled in the art to which the present disclosure pertains without departing from the scope of the present disclosure as claimed in the claims and that these modifications should not be understood respectively from the technical ideas or perspectives of the present disclosure.

## Claims

1. A battery pack comprising:
a plurality of battery cells;
a pack case configured to accommodate the plurality of battery cells and having a venting portion configured to discharge gas generated from the battery cells to the outside; and
a protective cover configured to cover at least a portion of the venting portion.

2. The battery pack according to claim 1,
wherein the protective cover is provided between the plurality of battery cells and the venting portion.

3. The battery pack according to claim 1,
wherein the protective cover is configured to cover the upper portion of the venting portion so as to block sparks emitted from the battery cell.

4. The battery pack according to claim 3, further comprising
a module case configured to accommodate the plurality of battery cells in an inner space and having a venting hole formed at the top thereof so as to communicate with the inner space.

5. The battery pack according to claim 1,
wherein the pack case comprises
a base frame on which the plurality of battery cells are seated, and
a side frame extending upwards from the base frame and having the venting portion formed thereon, and
wherein the protective cover is configured to face the side frame where the venting portion is formed.

6. The battery pack according to claim 5,
wherein the pack case further comprises
a pack lid coupled to the top of the side frame and configured to cover the top of the plurality of battery cells, and
wherein the protective cover is coupled to the pack lid.

7. The battery pack according to claim 6,
wherein the protective cover comprises
a main cover provided to face the venting portion, and
a lid-coupled portion extending from the main cover to be bent toward the pack lid and coupled to the pack lid.

8. The battery pack according to claim 7,
wherein the protective cover further comprises
a side cover configured to be bent from both sides of the main cover toward the side frame.

9. The battery pack according to claim 8,
wherein the side cover is configured such that the end thereof comes into contact with the side frame.

10. The battery pack according to claim 9,
wherein the protective cover further comprises
a support portion configured by bending the end of the side cover so as to be supported on the side frame.

11. The battery pack according to claim 8,
wherein the protective cover further comprises
a lower bent portion configured to be bent from the lower end of the main cover toward the base frame.

12. The battery pack according to claim 8,
wherein the protective cover further comprises
a protrusion configured such that at least a portion of the main cover protrudes in a direction away from the side frame.

13. The battery pack according to claim 7,
wherein the protective cover further comprises
an inner bent portion configured to be bent from both sides of the main cover in a direction away from the side frame.

14. A vehicle comprising the battery pack according to any one of claims 1 to 13.
